# EUROPÄISCHE PATENTANMELDUNG

(11) **EP 4 082 695 A1**
(43) Veröffentlichungstag der Anmeldung: **02.11.2022**
(21) Anmeldenummer: 22162299.6
(22) Anmeldetag: 15.03.2022
(51) Int. Cl.: B22F 3/22, B21J 1/00, B21J 1/06, B22F 10/20, B22F 10/38, C22C 1/04, C22C 45/00

(54) **WERKZEUGMASCHINENKOMPONENTE SOWIE VERFAHREN ZUR HERSTELLUNG EINER SOLCHEN WERKZEUGMASCHINENKOMPONENTE ENTHALTEND ZUMINDEST EINEM TEIL AUS AMORPHEN METALL**

(30) Priorität: 30.04.2021 DE 102021111186
(71) Anmelder: Haimer GmbH, 86568 Hollenbach-Igenhausen (DE)
(72) Erfinder: Haimer, Franz, 86568 Hollenbach-Igenhausen (DE)

(57) **Zusammenfassung**

Werkzeugmaschinenkomponente sowie ein Verfahren zur Herstellung einer solchen Werkzeugmaschinenkomponente.

Die Erfindung betrifft eine Werkzeugmaschinenkomponente sowie ein Verfahren zur Herstellung einer solchen Werkzeugmaschinenkomponente.

Um Werkzeugmaschinenkomponenten in ihren Einsatz zu verbessern, ist vorgesehen, dass die Werkzeugmaschinenkomponente zumindest zum Teil, insbesondere im Wesentlichen oder auch vollständig, aus einem amorphen Metall besteht. Nach dem verfahren ist vorgesehen, die Werkzeugkomponente durch Spritzgießen oder 3D-Druck oder Umformen herzustellen.

## Beschreibung

Die Erfindung betrifft eine Werkzeugmaschinenkomponente sowie ein Verfahren zur Herstellung einer solchen Werkzeugmaschinenkomponente.

Werkzeugmaschinen sind, wie bekannt ist, Maschinen zur Fertigung von Werkstücken mittels (Maschinen-)Werkzeugen, deren Bewegung zueinander durch die Maschine vorgegeben wird. Zu den wichtigsten Vertretern solcher Werkzeugmaschinen zählen hierbei Dreh- und Fräsmaschinen - mit den dementsprechenden (Maschinen-)Werkzeugen, wie Drehwerkzeuge und Fräswerkzeuge.

Solche Werkzeugmaschinen weisen eine Vielzahl von Komponenten auf, deren bekannteste, insbesondere solcher bekannter Dreh- und Fräsmaschinen, Spindeln, Werkzeugaufnahmen und die (Maschinen-)Werkzeuge sind, wobei alle - auch als genormte Schnittstellen - im Bewegungsstrang der Werkzeugmaschine bzw. der Dreh-/Fräsmaschine miteinander verbunden sind.

Die Werkzeugaufnahme, welche einen schnellen Werkzeugwechsel bei der Werkzeugmaschine bei gleichzeitig hoher (Positions-)Genauigkeit gewährleisten soll, ist dabei eine in der Regel als Spannvorrichtung gestaltete Einrichtung zum Aufnehmen und Festhalten des (Maschinen-)Werkzeugs (kurz im Folgenden nur "Werkzeug"). Werkzeugaufnahmen sollen in der Regel hohe Steifigkeit, gute Oberflächengenauigkeit, hohe Korrosionsbeständigkeit und hohe Härte bei gleichzeitig hoher Zähigkeit aufweisen, was durch Verwendung eines entsprechenden Materials, wie Hartmetalle, bewerkstelligt werden kann.

Die Spindel, genauer die werkzeugtragende Arbeitsspindel der Werkzeugmaschine, wird in der Regel angetrieben von einem Motor der Werkzeugmaschinen und ist - vereinfacht und anschaulich ausgedrückt - eine Welle mit integrierter Werkzeugschnittstelle. Die Welle muss dabei steif genug sein, um sich durch radiale Kräfte möglichst wenig zu verbiegen. Die Steifigkeit hängt u. A. von Durchmesser, Material und Länge der Welle ab. Ein größerer - und in der Regel steiferer - Durchmesser führt aber wiederum zu einem höheren Massenträgheitsmoment, was den Energieaufwand für die Beschleunigung erhöht. Daneben spielt ein dynamische Verhalten der Welle eine wichtige Rolle. Die rotierende Welle stellt mit Antrieb und Lagerung ein schwingungsfähiges System dar, welches bei Erreichen seiner kritischen Drehzahl instabil werden kann.

Das Werkzeug, beispielsweise das Fräswerkzeug, kurz nur Fräser, das Drehwerkzeug, wie ein (Dreh-)Meißel, oder auch ein Bohrer ist - anschaulich ausgedrückt - die "abtriebsseitig letzte" Komponente der Werkzeugmaschine, die so dann auf ein mechanisch zu bearbeitendes Werkstück formend einwirkt. Werkzeuge sollen in der Regel hohe Verschleißfestigkeit, hohe Korrosionsbeständigkeit und hohe Härte bei gleichzeitig hoher Zähigkeit aufweisen, was durch Verwendung eines entsprechenden Materials, wie Hartmetalle, und/oder durch eine geeignete Wärmebehandlung bewerkstelligt werden kann.

Im Generellen werden so von Werkzeugmaschinenkomponenten - um ihren jeweiligen Zwecken/Aufgaben zu genügen - eine Vielzahl von - zum Teil auch gegenläufigen - Eigenschaften gefordert, wie die vorerwähne Härte, Verschleiß und Zähigkeit. Eine entsprechende zielgerichtete und aufgabenorientierte Materialauswahl und deren entsprechendes zielgerichtetes und aufgabenorientiertes Bearbeitungsverfahren ist so von wesentlicher Bedeutung bei Werkzeugmaschinenkomponenten.

Es ist Aufgabe der Erfindung, die im Stand der Technik bekannten Werkzeugmaschinenkomponenten zu verbessern.

Diese Aufgabe wird gelöst durch eine Werkzeugmaschinenkomponente sowie ein Verfahren zum Herstellen einer Werkzeugmaschinenkomponente mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf die Werkzeugkomponente wie auch auf das Verfahren.

Gegebenenfalls verwendete Begriffe, wie oben, unten, vorne, hinten, links oder rechts sind - soweit nicht anders explizit definiert - nach üblichem Verständnis zu verstehen. Begriffe, wie radial und axial, sind, soweit verwendet und nicht anders explizit definiert, in Bezug auf eine Mittelachse der Werkzeugmaschinenkomponente zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die Werkzeugmaschinenkomponente zeichnet sich dadurch aus, dass sie zumindest zum Teil, insbesondere im Wesentlichen oder auch vollständig, aus einem amorphen Metall besteht (kurz vereinfacht im Folgenden auch nur als "amorphe Werkzeugmaschinenkomponente" bezeichnet).

Unbeschadet dessen, können so auch "(werkstoff-)kombinierte" Werkzeugmaschinenkomponenten vorgesehen sein, welche so beispielsweise einen "amorphen" (Werkzeugmaschinenkomponenten-)Grundkörper mit "nicht-amorphen" "Anbauten" oder Kerne, so beispielsweise "amorph-beschichtete" Kerne, - bzw. vice versa - und/oder "nicht-amorphe" Beschichtungen bei der Werkzeugmaschinenkomponente vorsieht.

Solche nicht-amorphen (Werkzeugmaschinenkomponenten-)Teile können metallisch oder auch nicht metallisch, beispielsweise aus Kunststoff, sein.

Amorphe Metalle - oder auch als metallische Gläser bezeichnet - sind Metall- oder Metall-und-Nichtmetall-Legierungen, die auf atomarer Ebene keine kristalline, sondern eine amorphe Struktur aufweisen und trotzdem metallische Leitfähigkeit zeigen. Das heißt, die Atome bei amorphen Metallen bilden kein (geordnetes) Gitter, sondern sind - auf einen ersten Blick - regellos angeordnet. Kurz, es besteht keine Fern-, sondern allenfalls eine Nahordnung.

Amorphe Metalle oder metallische Gläser entstehen, indem die Ausbildung einer (geordneten) Gitterstruktur bzw. eine natürliche Kristallisation - beim Phasenübergang vom Flüssigen ins Feste - verhindert wird. Dies kann zum Beispiel durch ein Entwickeln bestimmter Legierungszusammensetzungen, wie zirkonium-, kupfer-, eisen- und/oder titanbasierte Legierungen, und/oder durch ein rasches Abkühlen ("Abschrecken") einer (Metall-)Schmelze geschehen, so dass den Atomen die Beweglichkeit geraubt wird, bevor sie die Kristallanordnung einnehmen können. Kurz und einfach ausgedrückt, sie werden in ihrer Unordnung eingefroren - und entwickeln dadurch außergewöhnliche Werkstoffeigenschaften, wie hohe Festigkeit - kombiniert mit guter Elastizität, hohe Oberflächengüte, hohe Härte, geringen Abrieb und hohe Korrosionsresistenz.

Da es beim "Einfrieren" der Flüssigkeitsstruktur am Glasübergang - im Gegensatz zu kristallinen Materialien - nicht zu einer plötzlichen, sprunghaften Volumenänderung (Erstarrungskontraktion) kommt, erspart sich ein Nachspeisen der Schmelze und verhindert die Entstehung von Lunkern, welche in der Regel mit einer Verminderung der mechanischen Eigenschaften einhergeht.

Da auch die Glasstruktur - im Gegensatz zu kristallinen Werkstoffen - keine klassische geordnete Gefügestruktur aufweist, lassen sich amorphe Metalle oder metallische Gläser bis auf atomarer Ebene verformen, wodurch sich einzigartige Möglichkeiten zur deren Strukturierung und Formgebung ergeben.

Bei dem Verfahren zur Herstellung einer bzw. einer solchen Werkzeugmaschinenkomponente wird zumindest derjenige Teil der Werkzeugkomponente, welcher den zumindest amorph-metallischen Teil der Werkzeugkomponente ausbilden soll, einem Spritzgießen oder einem 3D-Druck oder einem Umformen unterzogen - , welches Verfahren eine gitterbildende Kristallisation bzw. einen regelmäßigen Gitterzustand bei der Werkzeugmaschinenkomponente bzw. -metall verhindert und so zu einem regellosen bzw. ungeordneten Zustand führt (Spritzgießen, 3D-Druck) - oder eben einen solchen (regellosen bzw. ungeordneten Gitterzustand) aufrechterhält (Umformen).

Auch Kombinationen der genannten Verfahren sind bei dem Verfahren vorstellbar, wie beispielsweise das bzw. ein anfängliches Spritzgießen gefolgt von dem bzw. einem späteren Umformen.

Insbesondere mit einem solchen späteren Umformen, lassen sich dann - bei zunächst einfachstrukturierten und oder einfachgeformten Grundkörpern - komplexe Strukturen und/oder Formen erzeugen.

Auch die Kombination des Verfahrens - aufsetzend auf eine herkömmlich hergestellte Werkzeugmaschinenkomponente, beispielsweise ein "Anbau" (oder "Drumherumbau" (Kern) oder Beschichtung) des amorphen Werkzeugmaschinenkomponententeils an (bzw. um) einen herkömmlich hergestellten, beispielsweise gegossenen und/oder aus dem Vollen zerspanten, wie gedrehten, gebohrten, gefrästen und/oder geschliffenen, Werkzeugmaschinenkomponentengrundkörper mittels des 3D-Drucks, wie ein additiv gefertigter werkzeugseitiger Aufnahmebereich (Spannfutterbereich) bei einer Werkzeugaufnahme an eine herkömmlich gegossene spindelseitige Schnittstelle (z.B. HSK u.Ä.) der Werkzeugaufnahme, kann zweckmäßig sein.

Ebenso kann vorgesehen sein, dass ein herkömmlich hergestellter, beispielsweise gegossener und/oder (aus dem Vollen) zerspannter, wie gedrehter, gefräster, gebohrter und/oder geschliffener), Werkzeugmaschinenkomponentengrundkörper (Kern) mit dem amorphen Werkzeugmaschinenkomponententeil 3D-umdruckt und/oder (mit dem Spritzgießen) "umspritzt" wird. Dies kann so dann beispielsweise eine "amorphe Beschichtung" bei der Werkzeugmaschinenkomponente darstellen.

Ebenso kann es sich als zweckmäßig erweisen, wenn bei dem 3D-Druck oder dem Spritzgießen und/oder dem Umformen "Inseln" bzw. Einschlüsse, insbesondere aus einem anderen Werkstoff bzw. Metall/Legierung als das amorphe Metall und/oder dann in der (fertigen) Werkzeugmaschinenkomponente in anderer Struktur, insbesondere in geordneter Gitterstruktur, vorliegend, eingedruckt oder eingespritzt oder eingeformt werden. Solche "Inseln" bzw. Einschlüsse können innenliegend und/oder oberflächig bei der Werkzeugmaschinenkomponente sein bzw. ausgebildet werden.

Hierdurch lassen sich zusätzliche - bei bestimmten Werkzeugmaschinenkomponenten - gewünschte Eigenschaften, wie beispielsweise eine elektrische Leitfähigkeit, erzeugen.

Solche "Inseln" bzw. Einschlüsse können auch durch Wärmebehandlung erzeugt werden, beispielsweise durch gezieltes bereichsweises Herstellen einer Gitterstruktur durch lokale Erwärmung über die Glastemperatur und Abschreckung, insbesondere an der Oberfläche.

Unbeschadet des Verfahrens kann auch eine Nachbearbeitung der durch das Verfahren hergestellten Werkzeugmaschinenkomponente mittels eines herkömmlichen Verfahrens sein, wie beispielsweise ein (nachfolgendes) Honen der Werkzeugmaschinenkomponente.

Amorphe Metalle oder metallische Gläser können, wie nach dem Verfahren vorgesehen, im Spritzguss oder in einem 3D-Druck oder auch durch Umformen verarbeitet werden, um so die Werkzeugkomponente herzustellen.

Beim Spritzgießen werden so zweckmäßigerweise, wie bei der Werkzeugkomponente vorgesehen, die amorphen Metalle oder metallische Gläser aufgeschmolzen und im flüssigen Zustand in eine Form eingespritzt, in der sie - ohne die Gitterstruktur ausbildende Kristallisation - erstarren.

Zweckmäßigerweise sieht die Form eine Kühlung vor, welche eine ausreichende Wärmeabfuhr zur Verfügung stellt und die Werkzeugkomponente ohne die Gitterstruktur ausbildende Kristallisation erstarren lässt.

Beim 3D-Druck, auch bekannt unter den Bezeichnungen additive Fertigung oder generative Fertigung, wird zweckmäßigerweise, wie bei der Werkzeugkomponente vorgesehen, Material, hier amorphes Metallpulver, Schicht für Schicht aufgetragen und so dreidimensionale Gegenstände (Werkstücke), d.h. hier die Werkzeugkomponente, erzeugt. Beim (Schicht-)Aufbau finden physikalische oder chemische Härtungs- oder Schmelzprozesse statt, wobei aber eine Gitterstruktur ausbildende Kristallisation bei der Werkzeugmaschinenkomponente bzw. dessen Metall vermieden werden kann. Daneben können auch andere additive Verfahren zur Herstellung von Strukturen aus amorphen Metall geeignet sein, wie z. B. das Laserauftragsschweißen.

Insbesondere der für das Verfahren vorgesehene 3D-Druck erweist sich im Besonderen dort von Vorteil, wo komplexe Strukturen bei Werkzeugmaschinenkomponenten gefordert sind, beispielsweise Hydrodehnspannfutter, welche komplexe "innere" Kanalsysteme vorsehen, oder Schrumpffutter mit innen gelegenen Kavitäten (beispielsweise zur Schwingungsdämpfung) oder gewichtsreduzierte Werkzeugmaschinenkomponenten mit komplexen Leichtbauweisen.

Beim Umformen werden zweckmäßigerweise, wie bei der Werkzeugkomponente vorgesehen, - vorgefertigte - Bauteile aus amorphem Material, d.h. die Werkzeugmaschinenkomponente, - über ihrer Glasübergangstemperatur (unterkühlte Schmelze) erwärmt. Oberhalb dieser legierungsspezifischen Temperatur erweicht das amorphe Metall bzw. das Bauteil/die Werkzeugmaschinenkomponente, wie bei einer Verarbeitung von Thermoplasten im Spritzguss oder beim Glasblasen von Fensterglas, und kann dann gezielt in eine andere Form gebracht werden -, ohne dabei Material von den - vorgefertigten - Bauteilen zu entfernen. Der Werkstoff behält seine Masse und seinen Zusammenhalt bei. Diese Art der Verarbeitung ist für amorphe Metalle einzigartig und erfordert - weil nur bei oberhalb der Glasübergangstemperatur erwärmt wird - verhältnismäßig moderate Temperaturen (100 bis 500 °C) und Kräfte.

Es hat sich gezeigt, dass amorphe Metalle hohe Festigkeit - kombiniert mit guter Elastizität, hoher Oberflächengüte, hoher Härte, geringem Abrieb, hoher Positionsgenauigkeit und hoher Korrosionsresistenz - besitzen, wie auch, dass das Spritzgießen, der 3D-Druck und das Umformen die (Bearbeitung der) amorphen Materialien beherrschbar machen können (, um so insbesondere bzw. beispielsweise zu verhindern, dass sich (geordnete) Gitterzustände ausbilden).

Werden, wie vorbeschrieben, von Werkzeugmaschinenkomponenten - um ihren jeweiligen Zwecken/Aufgaben zu genügen - eine Vielzahl von - zum Teil auch gegenläufigen - Eigenschaften gefordert, wie Härte, Verschleißfestigkeit und Zähigkeit, und können unter Umständen bislang bekannte Materialien diesen Forderungen gegebenenfalls nicht ausreichend genügen bzw. erweist sich eine entsprechende zielgerichtete Materialauswahl bei Werkzeugkomponenten und deren entsprechendes zielgerichtetes Bearbeitungsverfahren bei diesen als schwierig, so bieten die amorphen Metalle, wie bei der Werkzeugmaschinenkomponente vorgesehen, - mit ihren ausgewöhnlichen Eigenschaften - und der Spritzguss, der 3D-Druck und das Umformen von diesen, wie bei dem Verfahren vorgesehen, die ideale Voraussetzung für hochwertige, langlebige, zweckentsprechende Werkzeugmaschinenkomponenten.

Darüber hinaus erweist sich insbesondere auch von besonderem Vorteil bei der "amorphe Werkzeugmaschinenkomponente" und/oder bei dem Verfahren, dass - aufgrund des amorphen Metalls - die "amorphe Werkzeugmaschinenkomponente" und/oder das Verfahren einen impliziten (Beschädigungs-)Schutz enthält. Verliert nämlich die "amorphe Werkzeugmaschinenkomponente" - beispielsweise durch unkontrollierte bzw. unsachgemäßer Überhitzung (über ihre Glastemperatur) und folgender unkontrollierten bzw. unsachgemäßer Abkühlung - ihre unregelmäßige bzw. gitterlose Struktur, geht dies einher mit einem feststellbaren Struktureffekt - bei der dann "ihrer amorphen Struktur verlustig gegangenen, nicht mehr amorphen Werkzeugmaschinenkomponente", sichtbar insbesondere auch an einer feststellbaren Volumenänderung. Wird so dieser bzw. dieses festgestellt, so stellt dies - ähnlich einer Sollbruchstelle - ein Schutz- bzw. gegebenenfalls Ausschlusskriterium für zukünftige Verwendungen der Werkzeugmaschinenkomponente dar.

Demzufolge ist es besonders zweckmäßig, wenn die Werkzeugmaschinenkomponente eine Werkzeugaufnahme, insbesondere ein Schrumpffutter oder (Hydro-)Dehnspannfutter oder ein (Werkzeug-)Spannsystem/-vorrichtung, ein Werkzeugspanndorn oder ein (Nullpunkt-)Spannsystem, oder ein Werkzeug, insbesondere ein Fräswerkzeug oder Rotationswerkzeug oder ein Bohrer, oder eine (Werkzeugmaschinen-)Spindel - oder eine andere Werkzeugmaschinenkomponente, wie eine Spannvorrichtung/-system, eine (Reduzier-)Hülse, ein Werkzeugträgerkopf, ein Messerkopf, ein (Wende-)Plattensitz, eine (Wende-)Platte, ein Werkzeugplattenträger, eine Hydrodehnhülse oder ein Adapter, ist, da gerade hier die außergewöhnlichen Eigenschaften amorpher Metalle im Besonderen zum Tragen kommen.

Insbesondere auch bei Spannsystemen, wie Werkzeugspannvorrichtungen, deren Spannkraft die Komponente aus sich selbst heraus erzeugt, wie beispielsweise bei dem Schrumpffutter, - und nicht erst durch Ausübung einer externen Spannkraft auf die Komponente durch ein Spannkraft erzeugendes Element erzeugt wird, wie beispielsweise durch ein einen Kegelsitz bei der Komponente erzeugendes Funktionselement, erweist sich das amorphe Metall bei einem solchen "selbst-spannenden" Spannsystem bzw. bei einer solchen "selbst-spannenden" Werkzeugspannvorrichtung von überraschender Zweckmäßigkeit. Denn wäre hier die ansonsten dem amorphen Metall zuzuordnende Elastizität gegebenenfalls von kontraproduktiver Wirkung (, könnte sie der "selbstspannenden" Funktion des Spannsystems/Spannvorrichtung entgegenwirken), so hat sich überraschend und unerwartet gezeigt, dass diesem Effekt, insbesondere auch bei bzw. zusammen mit entsprechender geometrischer Gestaltung der Komponente, wie beispielsweise ein größerer Spannbereich und/oder ein (größeres) Übermaß, untergeordneter und unschädlichen Einfluss zukommt.

Legierungen, deren Hauptstoff (Gewichts-)Anteilen von 50% bis 90%, ganz im Besonderen von 75% bis 80% oder 55% bis 60%, aufweisen, haben sich bei der Werkzeugmaschinenkomponente als zweckmäßig erwiesen.

Zweckmäßigerweise können insbesondere zirkonium-, kupfer-, eisen- und/oder titanbasierte (Metall-)Legierungen bei der Werkzeugmaschinenkomponente und dem Verfahren verwendet werden, insbesondere deren Hauptstoff (Gewichts-)Anteile von 50% bis 90%, ganz im Besonderen von 75% bis 80% oder 55% bis 60%, aufweist.

Insbesondere zirkoniumbasierte Legierungen, insbesondere solche mit Zirkonium-(Gewichts-)Anteilen von 50% bis 90%, ganz im Besonderen von 75% bis 80% oder 55% bis 60%, sind zweckmäßig, lassen hier die beschriebenen guten, für Werkzeugkomponenten besonders geeignete Eigenschaften erreichen.

Weitere Bestandteile bei solchen zirkoniumbasierten Legierungen können Kupfer, Aluminium, Nickel, Titan und/oder Niob sein, insbesondere solche jeweils in (Gewichts-)Anteilen von 1% bis 35%, ganz im Besonderen von 2% bis 20%.

Entsprechendes gilt auch für die vorsehbaren kupfer-, eisen- und/oder titanbasierten (Metall-)Legierungen, deren Haupt- und Nebenstoffe die (für die zirkoniumbasierten Legierungen) genannten (Gewichts-)Anteile vorsehen können.

Mögen bestimmte amorphe Metalle unter Umständen auch geringe elektrische und/oder magnetische Leitfähigkeit aufweisen, was gegebenenfalls bei bekannten induktiv zu behandelnden Schrumpffuttern - und bei deren induktivem Ein- und Ausschrumpfen - suboptimal sein könnte, so mag es hier insbesondere zweckmäßig sein, bei dem Verfahren, d.h. hier bei dem 3D-Druck, elektrisch und/oder magnetisch leitfähige (leitfähigkeitserhöhende) "Inseln" (Einschlüsse) mit beim 3D-Druck einzudrucken. Diese können dafür sorgen, dass die Werkzeugaufnahme ihre elektrische und/oder magnetische Leitfähigkeit erhöht, ohne, dass die sonstigen außergewöhnlichen Eigenschaften der amorphen Werkzeugmaschinenkomponenten verloren gehen. Diese Inseln (Einschlüsse) können durch Einlagerung anderer Stoffe und/oder durch Bildung von Bereichen mit anderer Struktur (z. B. Gitterstruktur) erzeugt werden.

Weiterbildend, insbesondere bei dem Verfahren, kann auch vorgesehen sein, die amorphe Werkzeugmaschinenkomponente an einen herkömmlich gefertigten, wie beispielsweise gegossenen, Werkzeugmaschinenkomponentengrundkörper "anzubauen", beispielsweise mittels des 3D-Drucks. So kann beispielsweise ein additiv gefertigter werkzeugseitiger Aufnahmebereich (Spannfutterbereich) bei einer Werkzeugaufnahme an eine herkömmlich gegossene spindelseitige Schnittstelle (z.B. HSK u.Ä.) der Werkzeugaufnahme angebaut werden.

Entsprechendes kann so auch bei dem Werkzeug - beispielsweise mit einem herkömmlichen Schaftteil und einem amorphen Bearbeitungsteil - vorgesehen sein.

Ebenso Entsprechendes kann bei herkömmlich gefertigten Grundkörpern, d.h. beispielsweise Kernen, vorgesehen sein, welche mit der amorphen Werkzeugmaschinenkomponente "umdruckt" und/oder "umspritzt (bzw. entsprechend "beschichtet") werden können.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigt:

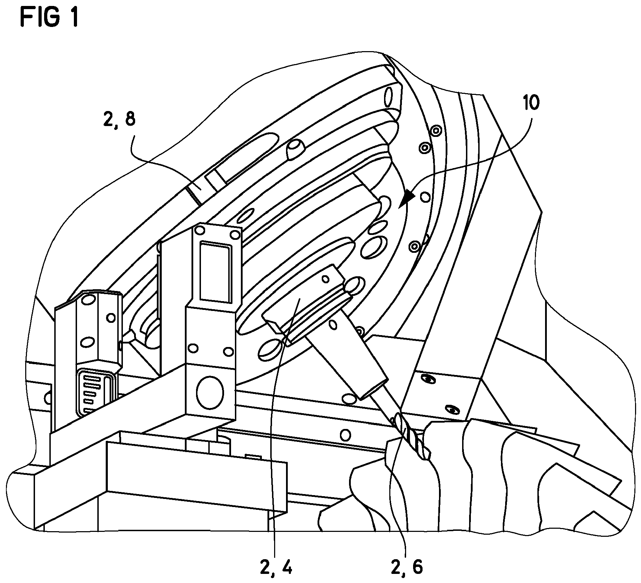

- FIG 1: eine Werkzeugmaschinenspindel, einen Werkzeughalter mit einem Werkzeug aus einem amorphen Metall gemäß einem Ausführungsbeispiel. - Werkzeugmaschinenspindel, Werkzeughalter und/mit Werkzeug aus amorphem Metall **(****FIG 1****)**

FIG 1 zeigt einen Teil einer Werkzeugmaschine 10, hier eine Fräsmaschine 10, bei einer Blisk-Bearbeitung.

Wie FIG 1 zeigt, sieht die Fräsmaschine 10 eine Spindel 8 (nur zum Teil sichtbar), eine Werkzeugaufnahme 4, in diesem Fall ein Schrumpffutter 4, und ein Werkzeug 6, in diesem Fall einen Fräser 6, vor.

Besonderheit bei dieser Fräsmaschine 10 ist, dass deren genannte Komponenten, hier die Spindel 8, das Schrumpffutter 4 und der Fräser 6, aus amorphem Metall bestehen (, wohingegen diese Komponenten von ihrem sonstigen Aufbau und ihrer Form nicht von Bekanntem und Üblichem abweichen).

Hierbei wurden die Komponenten aus einer zirkoniumbasierten Legierung mit einem Zirkonium-(Gewichts-)Anteil von 74% und weiteren (Gewichts-)Anteilen von Kupfer (17%), Aluminium (3%), Nickel (2%), Titan (2%) und Niob (2%) gefertigt.

Wohingegen die Spindel 8 und der Fräser 6 spritzgegossen wurden, wurde das Schrumpffutter 4 durch 3D-Druck hergestellt.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 2: Werkzeugmaschinenkomponente
- 4: Werkzeugaufnahme, Schrumpffutter
- 6: Werkzeug, Fräser
- 8: Spindel
- 10: Werkzeugmaschine, Fräsmaschine

## Patentansprüche

1. Werkzeugmaschinenkomponente (2)
**dadurch gekennzeichnet, dass**
die Werkzeugmaschinenkomponente (2) zumindest zum Teil, insbesondere im Wesentlichen oder auch vollständig, aus einem amorphen Metall besteht.

2. Werkzeugmaschinenkomponente (2) nach einem der voranstehenden Ansprüche
**dadurch gekennzeichnet, dass**
die Werkzeugmaschinenkomponente (2) eine Werkzeugaufnahme (4), insbesondere ein Schrumpffutter oder (Hydro-)Dehnspannfutter oder ein (Werkzeug-)Spannsystem/- vorrichtung, ein Werkzeugspanndorn oder ein (Nullpunkt-)Spannsystem, oder ein Werkzeug (6), insbesondere ein Fräswerkzeug oder Rotationswerkzeug oder ein Bohrer, oder eine (Werkzeugmaschinen-)Spindel (8) - oder eine andere Werkzeugmaschinenkomponente, wie eine Spannvorrichtung/-system, eine (Reduzier-)Hülse, ein Werkzeugträgerkopf, ein Messerkopf, ein (Wende-)Plattensitz, eine (Wende-)Platte, ein Werkzeugplattenträger, eine Hydrodehnhülse oder ein Adapter, ist.

3. Werkzeugmaschinenkomponente (2) nach einem der voranstehenden Ansprüche
**dadurch gekennzeichnet, dass**
das amorphe Metall der Werkzeugmaschinenkomponente (2) eine zirkonium-, kupfer-, eisen- und/oder titanbasierte (Metall-)Legierung ist.

4. Werkzeugmaschinenkomponente (2) nach einem der voranstehenden Ansprüche
**dadurch gekennzeichnet, dass**
ein Hauptstoff des amorphen Metalls der Werkzeugmaschinenkomponente (2) (Gewichts-)Anteile von 50% bis 90%, insbesondere von 75% bis 80% oder 55% bis 60%, aufweist.

5. Werkzeugmaschinenkomponente (2) nach einem der voranstehenden Ansprüche
**dadurch gekennzeichnet, dass**
das amorphe Metall der Werkzeugmaschinenkomponente (2) weitere Legierungsbestandteile, insbesondere Kupfer, Aluminium, Nickel, Titan und Niob, ganz im Besonderen solche jeweils in (Gewichts-)Anteilen von 1% bis 35% oder von 2% bis 20%, aufweist.

6. Werkzeugmaschinenkomponente (2) nach einem der voranstehenden Ansprüche
**dadurch gekennzeichnet, dass**
die Werkzeugmaschinenkomponente (2) neben dem amorphen Maschinenkomponententeil ein nicht-amorphes weiteres Maschinenkomponententeil, insbesondere einen metallischen oder nichtmetallischen Kern und/oder Anbau, aufweist.

7. Verfahren zur Herstellung der Werkzeugmaschinenkomponente (2) nach einem der voranstehenden Ansprüche,
**dadurch gekennzeichnet, dass**
die Werkzeugmaschinenkomponente (2) unter Verwendung eines Spritzgießens oder eines 3D-Drucks oder eines Umformens hergestellt wird.

8. Verfahren nach einem der voranstehenden Verfahrensansprüche
**dadurch gekennzeichnet, dass**
bei der Herstellung der Werkzeugmaschinenkomponente (2) das Verfahren im Kombination mit einem herkömmlichen Herstellungsverfahren, insbesondere einem Gießen und/oder Zerspanen, eingesetzt wird.

9. Verfahren nach einem der voranstehenden Verfahrensansprüche
**dadurch gekennzeichnet, dass**
eine Nachbearbeitung bei der durch das Verfahren hergestellten Werkzeugmaschinenkomponente (2) durchgeführt wird.

10. Verfahren nach einem der voranstehenden Verfahrensansprüche
**dadurch gekennzeichnet, dass**
bei dem 3D-Druck und/oder dem Spritzgießen und/oder dem Umformen "Inseln" oder Einschlüsse, insbesondere aus einem anderen Werkstoff als das amorphe Metall und/oder dann in der (fertigen) Werkzeugkomponente in anderer Struktur, insbesondere in geordneter Gitterstruktur, vorliegend, eingedruckt und/oder eingespritzt und/oder eingeformt und/oder durch Wärmebehandlung erzeugt werden.
